# EUROPEAN PATENT SPECIFICATION

(11) **EP 3 668 357 B1**
(45) Date of publication and mention of the grant of the patent: **05.05.2021**
(21) Application number: 18773644.2
(22) Date of filing: 14.08.2018
(51) Int. Cl.: A47J 31/54

(54) **COFFEE MACHINE COMPRISING A TWO-PART THERMOBLOCK**
KAFFEEMASCHINE MIT EINEM ZWEITEILIGEN THERMOBLOCK
MACHINE À CAFÉ COMPRENANT UN BLOC THERMIQUE EN DEUX PARTIES

(30) Priority: 14.08.2017 IT 201700086649
(43) Date of publication of application: 24.06.2020
(73) Proprietor: CARBONELLI, Fernando, 80017 Melito Di Napoli (IT)
(72) Inventor: CARBONELLI, Fernando, 80017 Melito Di Napoli (IT)
(74) Representative: Garavelli, Paolo
(86) International application number: PCT/IT2018/050155
(87) International publication number: WO 2019/035149

(56) References cited:
- US-A1- 2006 107 839
- US-A1- 2010 132 565

## Description

The present invention relates to the field of machines for the production of espresso coffee beverages (coffee, tea, infusions in general), applicable also in the naval field, automotive, aeronautic and railway and in detail, relates to a machine for the production of espresso coffee for use in the most disparate sectors that small size and its low number of components can be considered unique. The infusion and in particular the coffee can be collected in pods, coffee waffle or loose. The espresso coffee machine for its special lever closing, which reduces considerably the number of components and the complexity and dimensions and for its boiler integrated without coils that reduces considerably the volume can be adapted to small spaces and easily inserted on office desks or in spaces dedicated thereto.

Known espresso coffee machines are constituted by:
- a thermoblock, which has the function of raising the temperature of the water up to about 90 °;
- a pod holder structural not generally made of plastic material, on which is positioned the wafer cap and/or the infusion
   system;
- a lever mechanism, which ensures the hermetic closure of the group to high values of pressure and temperature.

These machines are intended for offices, bar and kitchen and are realized by means of injection of plastic materials and/or metal as (steel, brass, bronze, aluminum, etc.), worked CNC, lathe, mill, drills, bending column etc.

US D755,000S in the name of for example Lavazza teaches that an espresso coffee machine is composed of a plurality of components, some plastic and obtained by injection and which form for the more the aesthetic and/or structural part with the addition of ribs. In it, the closing mechanism is formed of not less than three distinct parts:
- a operating lever;
- a connecting rod;
- a crank;
connected to supporting thermoblock and to the uprights by means of pegs, screws and/or bolts which ensure the handling and hermetic closure with the holder-pods.

As regards instead the espresso machine, document US 2010132565 A1,in the name of Spinel SRL, discloses a closure mechanism in which several parts, with minimum three components:
- a lever;
- a connecting rod;
- a crank,
connected to each other and to movable thermoblock, convert the rotary motion applied from the outside by means of the lever, in rectilinear motion necessary for the mechanism of the same, thus ensuring the hermetic closure during infusion and at high pressure and temperature.

Is also known that the assembly of the parts of a machine for expressed must respond to regulations in terms of resistance to the pressure to force sustainable and to thermal increases, especially in the points in which they are accumulated and increase these values and to safety standards in the electrical field.

In particular, an espresso coffee machine comprises at least 5 distinct parts:
- a thermoblock with resistances and thermostats;
- a drive system consisting of rods, cranks, lever and pins;
- a pod holder on which is inserted a filter;
- a pump of at least 9 bar;
- a tray for the collection of water;
- a series of pipes, fittings and switches;
to which further components may be added in order to optimize and improve the possible adjustments, comfort and the appearance (knobs, valves, drives, adjustment, bodies , representations etc.).

In detail, the thermoblock back is mainly composed of several separate pieces:
- or two machined elements and connected to each other in the middle of which there is interposed a gasket and on whose inner faces are excavated suitable coils which cause raising the temperature of the water passing through, that coupled together by means of a automated procedure, by means of robot or manually through operators, form the thermoblock; substantially rectangular or cylindrical if seen in plan view is usually fixed to supporting upright.
- or more cylindrical parts, which suitably worked, perforated prismatic and coupled generate the rise in the temperature of the water which is required to generate the infusion.

The systems for moving the pod holder or the thermoblock need of many elements prior to being inserted. These elements comprise at least one connecting rod, a crank, an actuation lever and a support structure where then fixed with screws and/or pins the completed assembly. They are necessary for the transformation of the motion from rotary to linear by
means of the kinematic mechanism of the assembly for lever system .

A mechanism for espresso coffee machines of the known type (Lavazza my) mode is illustrated in D755,000S and US 2016150907 (A1); the document shows a handle made of shaped steel connected to a connecting rod in plastic, reinforced by ribs and obtained for injection and in turn connected to a crank also made of plastic and togetherform the actuation. This crank mechanism is attached to the chassis in plastic, reinforced by ribs.

Espresso coffee machines of the known type have some disadvantages. In particular for the of the different components of the body of the boiler and of the crank mechanism not only for fixing the electrical and hydraulic elements, it is necessary to provide several mold and only in a subsequent step in the process is to provide the final assembled, with considerable effort for the several parts.

Not last, to the load bearing framework of, must then be fixed, in addition to those parts which allow to carry out the mechanism and the heating also the external bodies which ensure the aesthetics. Typically, they consist in plastic or folded metal sheets, anchored to the base and/or to the uprights by means of suitable fixing elements, often for rapid coupling.

These processes are onerous from the point of view of time and inefficient from the economic point of view. The presence of numerous parts or other equivalent fixing means (bolts and nuts) creates critical points, in which accidental events may occur loosening or detachment of the fixing means, with consequent malfunctions or even worse breakage of the machine.

Object of the present invention is to describe an espresso coffee machine compact, can also be used in other sectors different from the current one, with a reduction in the number of components and complexity, free from the drawbacks described above.

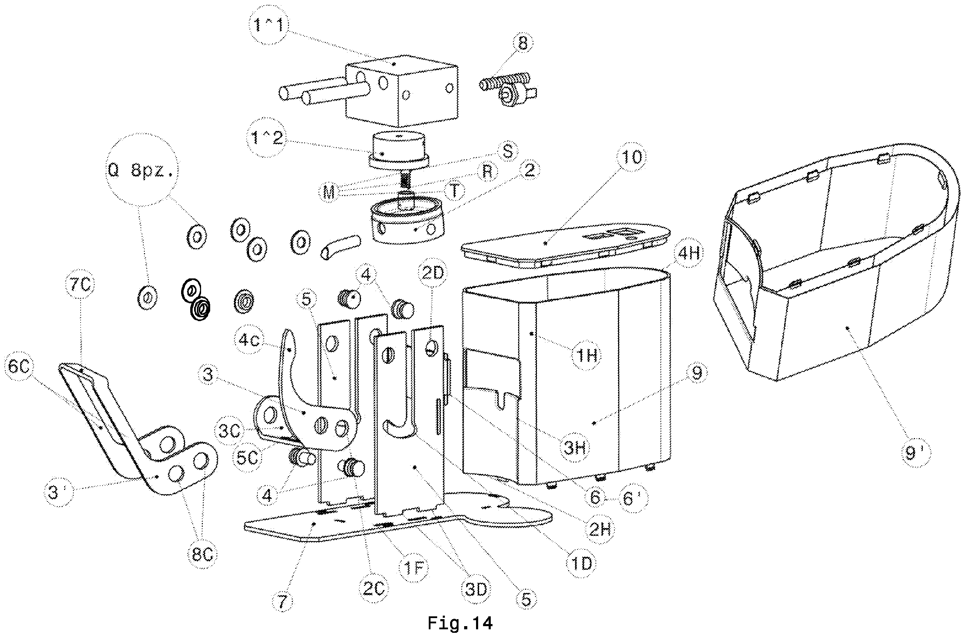

According to the present invention there is provided an espresso coffee machine compact with a thermoblock formed by two main parts screwed by means of a threaded coupling and brought flush to each other so as to considerably reduce their overall dimensions. Therefore we find:
- The inner cylindrical part threaded (male)1^2 that has an upper surface in the form of standard ese 44mm pod or of any other shape, n+1 blind holes (for n=0, ... , n) positioned at a distance such to allow the insertion of a key any suitable to ensure the maneuvers of clamping; provided on the upper face is provided a vertical through hole with different diameters one of which is threaded and where it is screwed the diffuser T, below which there is a spring R and a shutter S of rubber to form the group M and having the function of raising and make more constant the pressure and temperature of the water before its delivery act not only as a relief valve for the same (fig. 14) ; the part 1^2 and throughput flush with the surface of the part 1^1 cubic or of any other solid form such as for example (cylindrical, prismatic, rectangular parallelepiped, romboedro) to form the assembly compact and reduced the thermoblock 1.
- The outer part cubic 1^1 and/or of any other geometric shape, suitably perforated and threaded (female), receives the cylindrical part 1^2 threaded (male) described above.

When the clamping has been completed, the assembly composed of the two components previously described (1 ^ 1 and 1 ^ 2) forms in its interior a chamber "integrated" 1ab, which has the function of raising the temperature and the pressure of the fluid to approximately 9 bar and 90 °C, before the dispensing of hot water through the valve and of the diffuser M and on the pod.

In this way, the water will be forced to stay inside the chamber integrated 1ab, until the valve-diffuser M is changed to the values of pressure and temperature established by design, thus generating an infusion creamier and uniform and maintaining an almost constant pressure of 9 bar and a temperature of about 90 °.

When the pump is switched off, the inner chamber "integrated" 1ab, will he used in a completely natural" to return the hot water, clean and residual, again toward the tank and through a check valve interposed; thus generating a rinsing natural to each single drive, this by virtue of the increase in the pressure and the temperature have accumulated inside it in.

This mixing, has a considerable advantage:
- to ensure a preheating of the water present in the accumulation tank;
- to optimize the energy efficiency general.

This process considerably increases the average temperature of the water in the tank, improving the quality and the amount of flavor extract in the unit of time, with considerable advantages for the taste, the creaminess and the machine efficiency in terms of power consumption, heat and mass of clean water not lost.

As regards the system for lever K adopted for moving the pod holder 2 and/or the thermoblock 1, it consists of:
- a lever handle 3 or 3', with or without bar guiding (systems) on which are inserted in suitable holes formed on the lateral faces spindles 4 suitably studied in the sequence of the diameters and fitted into the open slots along the lateral uprights 5 generate the motion of the pod holder 2. In this manner it is exceeds the use of screws and/or bolts for the movement of the assembly K with respect to slotted guide seats 1D formed in the side uprights 5.

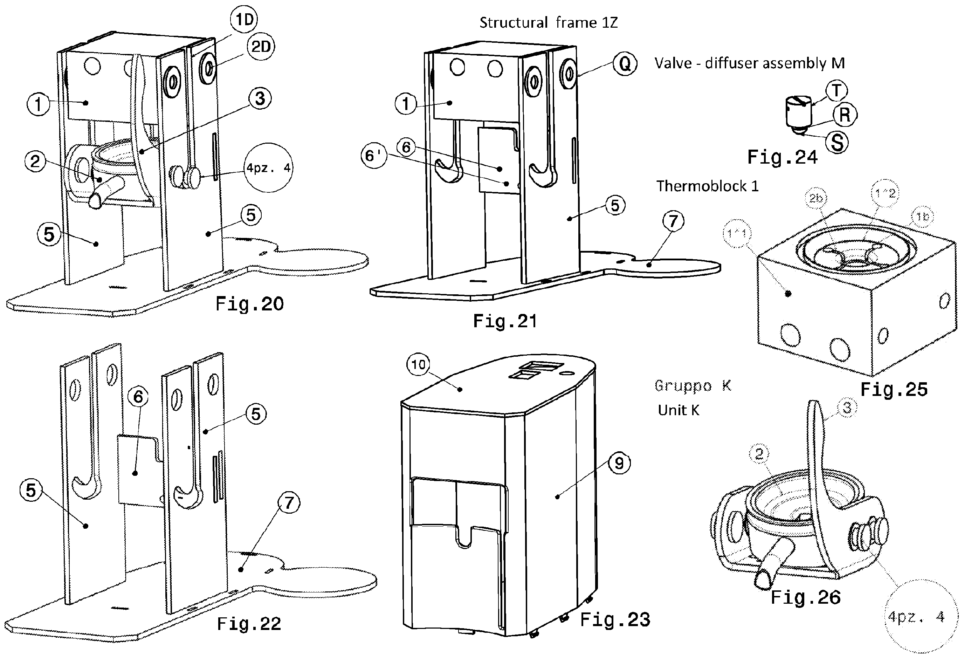

Therefore the assembly K (fig.25) consisting of:
- a lever 3 or 3';
- a pod holder 2;
- four shafts 4;
is mounted from above and before fixing the thermoblock back 1 to the side walls of the uprights 5 through the holes 2D and without the addition of additional fixing elements such as screws and/or bolts, but exclusively using the details shafts 4 (Fig. 20).

This system coupled hermetically to the thermoblock 1 the pod holder 2 and transforms the rotary motion of the lever 3 or 3' in translation of the pod holder 2 and/or thermoblock 1.

The thermoblock 1 together with the uprights 5 to the base 7 and to the plate 6 or rear guide 6', suitably are fixed together by means of screws, bolts, welding and/or other fixing systems, create a solid structural continuity 1Z (fig.21), which suitably insulated with bushes in teflon Q prevents unwanted thermal dissipation and conductors between the parts.

This configuration avoids the insertion of uprights to C for the support of the whole group K, thus providing a significant saving in working processes and weight, and on fastening systems.

In more, speeds up the assembly process with a remarkable economic return. The introduction from the above of the entire movable unit K, guided through the slotted path 1D, suitably designed, further increases the invention, saving on the procedures in the assembly phase. Moreover, in order to speed up the assembly and correct centring of the uprights 5 to the base 7 there are also provided suitable inserts and rectangular slots, or other shape to ensure the correct coupling between the parts.

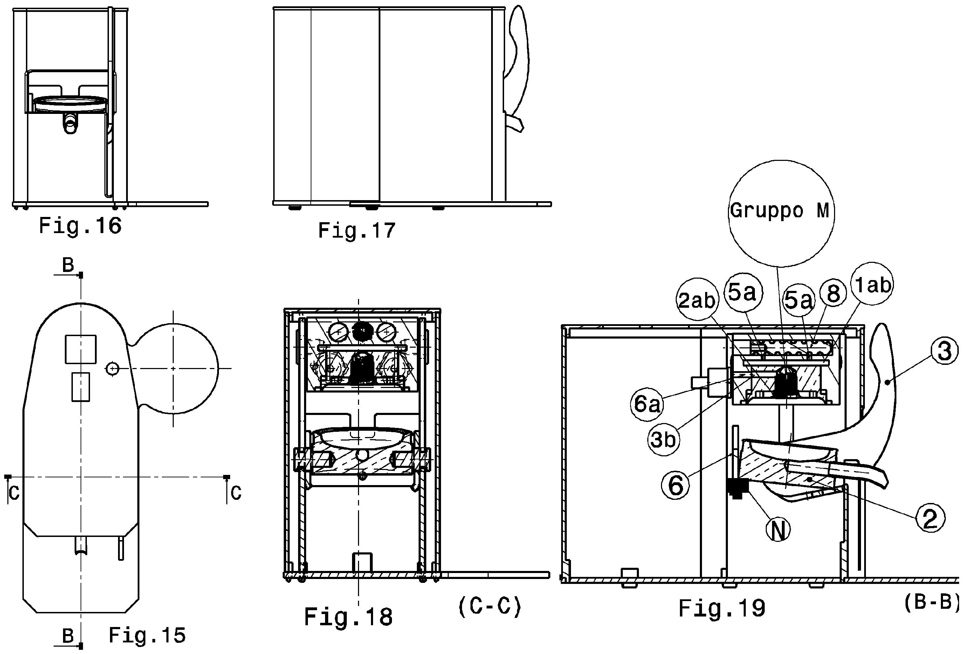

To complete the frame 1Z and in order to further stiffen and guiding the pod holder 2, was added a rear plate 6 or rectangular or square 6', or other shape also to side coupling is placed on the long sides of the uprights 5 (Figure 21); the plate 6 or 6' suitably shaped and perforated in the middle, where it is placed the adjusting screw N (fig. 19), allows the pod holder 2 coming from a straight motion, to rotate for a few degrees to its contact, preparing it for the insertion of the pod.

The invention will now be described with reference to the attached drawings, which illustrate a non-limiting embodiment example of the invention , in which:
Figure 1 shows a thermoblock 1 of a coffee machine according to the present invention , in a first embodiment;
- Figure 2 illustrates a pod holder 2 of a coffee machine according to the present invention , in a first embodiment;
- Figure 3 illustrates the operating lever 3 or 3' of a coffee machine according to the present invention, in a first or second embodiment;
- Figure 4 illustrates the shafts of connection between the actuation lever 3 or 3' and the uprights 5 of a machine Coffee according to the present invention , in a first embodiment.
- Figure 5 shows a support structure formed by two lateral uprights 5 of a coffee machine according to the present invention , in a first embodiment.
- Figure 6 shows the rear guide plate 6 or 6' of a coffee machine according to the present invention, in a first or second embodiment.
- Figure 7 shows the base 7 of a coffee machine according to the present invention, in a first embodiment.
- Figure 8 shows the torpedo to helix 8 of a coffee machine according to the present invention , in a first embodiment.
Figure 9 is a view of the case-tank 9 or 9' of a coffee machine according to the present invention, in a first or second embodiment.
- Figure 10 shows the top-case 10 of a coffee machine according to the present invention in a first embodiment.

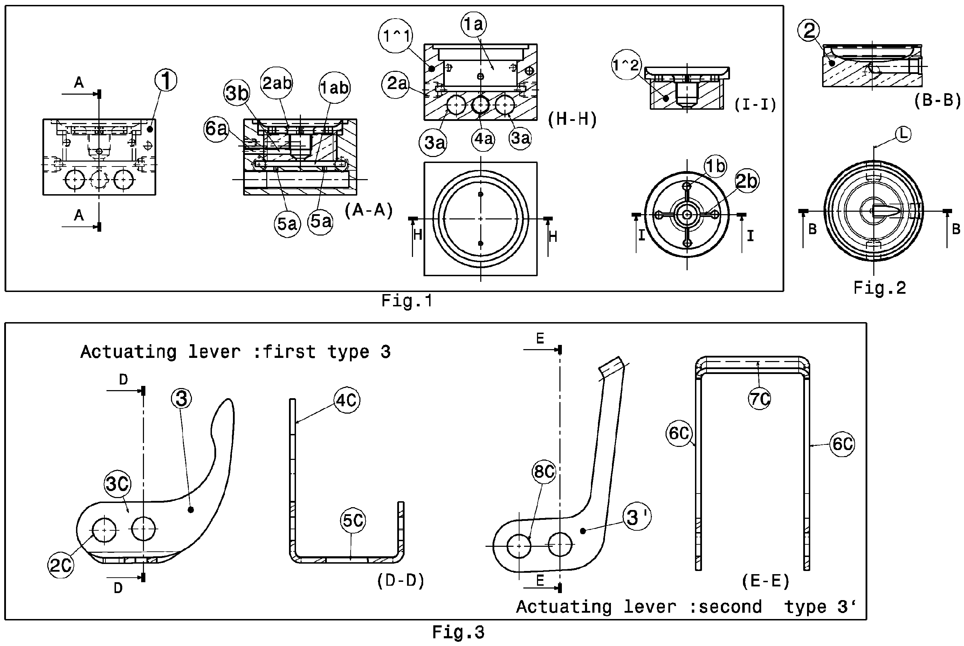

With reference to Figures 1 and 2:
- 1 indicates as a whole a thermoblock 1 for coffee machines and formed by:
   - a block outside 1^1 of cylindrical, prismatic shape or any other shape;
   - a cylindrical internal block 1^2 clamped and brought flush with respect to part 1^1;
- 2 indicates as a whole the pod holder 2;

In greater detail, the parts 1^1 and 1^2 clamped and brought flush to each other to form the thermoblock 1, generated inside them the chamber boiler 1ab (fig. 1). The parts 1^1 and 1^2 assembled, which give rise to the pod holder thermoblock 1 and 2 are made of more processing steps and each of a single piece. They are made according to the following method of removal of material by machining (not excluding any other method of manufacturing).

A first step provides for the drilling, the groove and the thread of a square bar, rectangular, cylindrical or other shape, formed on a first axis Z. During this first step, on the different faces of the workpiece 1^1 (fig.1) are created:
- on the upper plane of the central holes of different diameter some of which for housing the male threaded cylindrical part 1 ^ 2;
- on the lateral faces dx/Sx, and in the transverse direction y of threaded holes 2a required for the fixing to the side uprights 5 also perforated 2D;
- on front and rear faces, in a longitudinal direction X and one or two longitudinal through holes 3a housing/s the electric/s resistor/s;
- on the rear face in a longitudinal direction X and created a blind hole 4a partly threaded G1/8 housing in its interior the helix torpedo 8, which is helical metal heat exchanger and accelerator and inserted in the hole blind 4a before engagement of the fitting of high pressure, optimizes the overall size of the thermoblock 1 (fig. 19).

Such a hole can also be double is always on the same face, used for insertion of steam wand. Via the dead hole 4a and under the action of the pump, the water will be injected into the chamber/boiler 1ab through n+1(for each n=0, ... ,n) through holes 5a which place in communication the chamber 1ab with the inside of the hole 4a;
- on the back face has created the through hole 6a with an axis arranged along the X direction, in threaded part and that connects the interior of the chamber 2ab, formed by the coupling of the part 1^2 with the diffuser T, outside where it is present a valve which, when the pump is switched off, allows the outflow of the water from the chamber 2ab to the tank.

Likewise, during the first processing step, onto the upper surface of the block 1^2 are created of the blind holes 1b in number n+1 (for each n=0, ... , n), with as many recesses 2b diramanti toward the center (Figure 1).

The holes 1b ensure, by the insertion of a key a compass or any other type of wrench, the clamping of the blocks 1^1 with 1^2 to form the combination thermoblock 1 (fig.25) ; whereas the grooves 2b in number n+1 (for each n=0, ... , n) are useful both for uniformly wetting the pod during infusion and to channel and direct to the outside, when the pump is switched off, the water have accumulated in the chamber 2ab to the tank and through the coaxial through holes 3b and 6a made on the lateral walls of the parts 1^2 and 1^1.

Then a second processing step provides for the creation of the thread on the outer side surface of the part 1^2.

Finally, a third processing step provides the threading of the hole of the innermost part 1^2 and with the valve-diffuser M forms the chamber 2ab (Fig. 19) and in a manner such as to assume to both the final shape.

The subsequent phase shown in Figure 3 provides for the cutting of the same according to the required shape 1C of a metal plate, which subsequently perforated 2C is bent with the embodiment 3C, will form the handle 3 having a single external actuation lever 4C (right or left)and with connection to the opposite side by means of guiding bar inside 5C; since it can in any case provide in a second form of embodiment 3' (Figure 3) with handle formed by two outer levers 6C connected to each other by outer central part 7C to avoid the return inside 5C as for the handle 3; the levers 3 or 3' receive in the appropriate side holes 2C and 8C the shafts 4 that grafted to the uprights 5, constitute the actuation and the support for the parts described above (fig.14 ; 20).

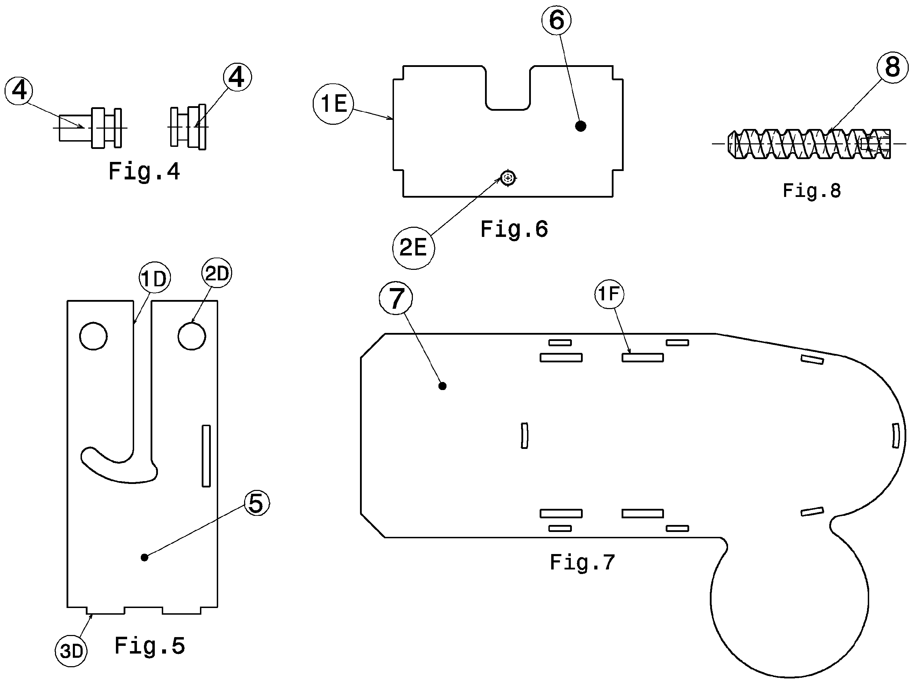

The next step, shown in Figure 5 provides for the creation of symmetrical slots 1D on the two side uprights 5 formed by a metal plate of defined thickness; the profile 1D can be of any shape is adapted to likewise ensure the functionality and correct closure mechanism between thermoblock 1 and pod holder 2.

In a second knitting step, the plates 5 are perforated according to scheme 2D fixed and insulated to thermoblock 1 by means of pins and bushes in teflon Q (Figure 21); the uprights 5 on the short side facing the base 7 have of the inserts 3D needed to the centering and to the fastening of the base 7 (Figure 14).

The next step is to describe the functions of the plate 6 or 6' positioned on the back of portal 1Z (Figure 21), constituted by the two side uprights 5 from thermoblock 1 and by the base 7 and is connected by means of couplings 1E (Figure 6).

This plate 6 or 6' (Figure 6) has the triple function:
- to reinforce the portal support;
- to create a straight guide the pod holder 2;
- to generate a rotation of the pod holder 2 when the latter is in contact with the adjusting screw N and placed in the hole 2E is formed in its center.

The next step is to describe the base 7 (Figure 7). It will have seats 1F that will receive the innests 3D positioned at the base of side uprights 5 (Figure 5) and that together with guide plate 6 or 6' will constitute the structural portal of figure 22 which with the thermoblock 1 will constitute the portal complete 1Z(Figure 21).

On Examining leverage system K (fig.25), which is formed by:
- pod holder 2;
- lever 3 or 3'; and
- shafts 4;
it regulates the closing and the movement of the pod holder 2 with respect to thermoblock 1 and vice versa. The system K by the rotation of the external handle imparts the correct mechanism following the program path from the slots 1D formed on the lateral uprights 5 (fig.20).

During the installation step, the group of lever mechanism K is inserted from the top through the slots 1D formed on the lateral uprights 5 and before it is attached the thermoblock 1 through the four lateral shafts and isolated with bushes in teflon Q (fig.20). With this assembly system, which makes use of shafts 4 suitably studied in the sequence of diameters are avoided, screws, bolts and threads thus ensuring a reduction in the assembly costs and times.

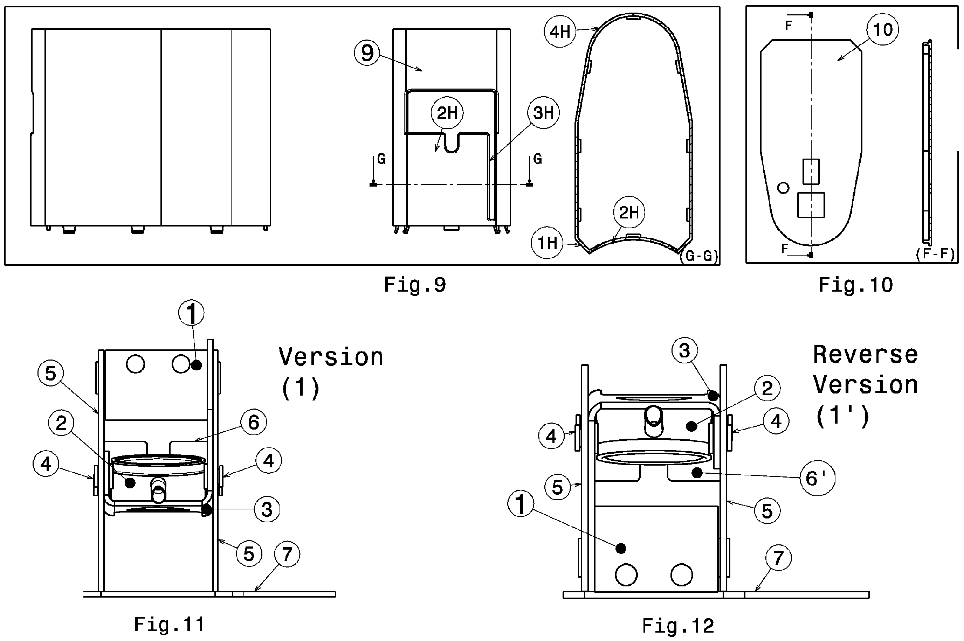

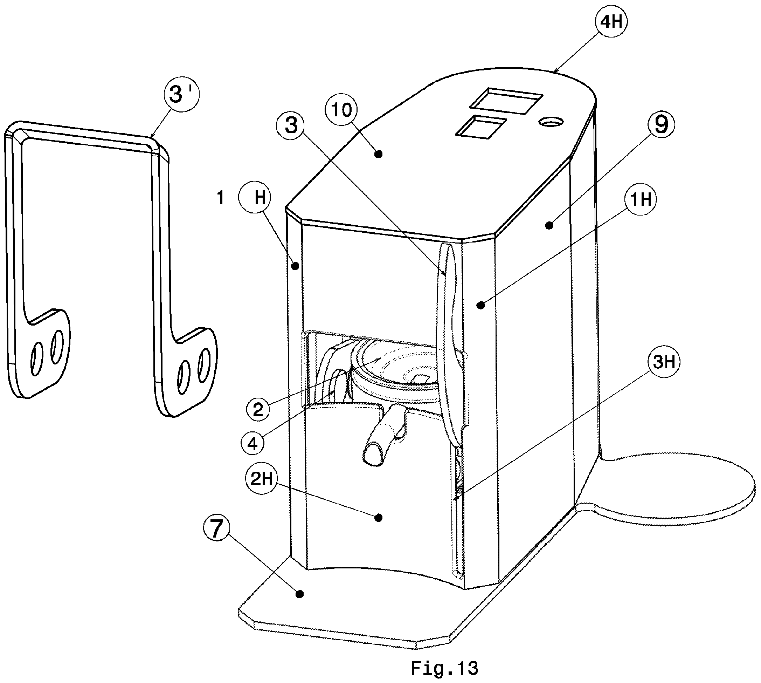

At this point the portal 1Z complete in all its parts is covered by a case of design of the outside 9 or 9' according to the present invention as shown in fig.13; the latter, in addition to being functional, enables the design to be improved. The case at the front is prismatic in shape with chamfers 1H = or = of 45 °, located on the edges of the front wall. Always on the front face, subjected to the opening for the insertion of the pod, we find a curved recess 2H, wherein a dx and/or sx are formed one or two slits 3H and in which is inserted the lever handle 4C (or 6C) during the operation (Figure 13). In detail, this recess 2H together with the chamfers 1H also have an aesthetic function and distinctiveness. In the rear region, the case has a semicylindrical degradation to 4H as shown in (Figure 13) . Moreover, the case can be also provided in a second form of embodiment 9' (Figure 14), emptied internally and as a tank for the water that is closed at the top and hermetically from the top-case shown in (Figure 10).

At this point the outside and ready to be painted and conveniently of inscriptions or adhesives according to the conventional techniques.

A second embodiment of the coffee machine 1' according to the present invention is illustrated in Figures 12 and 14.

In detail the handle 3' of the second embodiment of the coffee machine 1' differs from the one described above 3, for the shape of the side walls 6C (Figure 3), which are connected without inner linking plate 5C but through the external handle 7C to form a C and in such a way as to enable the gripping in the manner of cloche, necessary for the operation of the closing system (Figure 13).

In addition the arrangement the thermoblock 1 and the pod holder 2, that in the first embodiment were placed one above the other in the sequence pod holder 2 below and thermoblock 1 above with respect to the direction of the axis Z+ positive (FIG.11), are now arranged on the contrary that is inverted according to the same axis positive Z+, encountering from below first the thermoblock 1 and then the pod holder 2 as in (Figure 12).

In this way if reduces the overall dimensions and optimizes the infusion.

In general, for the embodiment of the coffee machine (1) 0 (1 ') according to the present invention there is provided the use of any type of metal, plastic, glass and composites, workable through chip removal, cold molding and/or hot printing 3D, sintering, injection and stratification. In detail, it is preferable steel, aluminum, bronze or brass, ensuring these optimum response in terms of resistance, thermal conduction and thermal capacity.

The slots, the grooves, the holes of the uprights and the thermoblock being performed with different shapes and number, with a different arrangement of the same on the structure and are suitable to ensure the lightening and the desired functionality.

The advantages of a coffee machine upside down lever system with reduced and boiler integrated (Figure 12) are known in the light of the foregoing description. In particular, it allows to reduce its overall weight, since the components required for its completion are less than what is known.

In the second place, a coffee machine according to the present invention allows to simplify the construction process, since the components are in a smaller number and each without welds are made on a single production process.

A coffee machine according to the present invention does not therefore need of structural components welded or painted and allows a remarkable reduction of production costs. In fact the use of a single production process allows to reduce with respect to the prior art is the number of machines or robots used for the production of the same and the optimization of production steps.

A coffee machine made according to the present invention is also safer. In fact, through the elimination of screws and without the addition of accessories, allows to better control leaks in the production giving rise to a product without critical points, since no welding or fixing means is present both on the uprights 5 on the handle 3 and 3'.

The single connecting element between the handle 3 or 3', the pod holder 2 and the uprights 5 are the four shafts 4 (Figure 20).

Finally, the coffee machine according to the present invention:
- has a greater and better extraction capacity of the infusion;
- permits to obtain a greater yield aesthetic;
- occupies less space; - of numerous elements turning down the number of complexity;
- and more compact.

To the coffee machine as described heretofore can be applied some variants. More in detail the shapes of the parts described so far can vary, and their location the dimensions of the holes of lightening, preparation and assembly; can also be present of the second containment walls, able to allow the creation of a tank for the water inside the case. This solution is particularly convenient for those seats where it is necessary to space and aesthetic value for example: desks of offices, boats, either aeriform, car, trains etc.

This project is be innovative in terms of design, innovation and compactness.

## Claims

1. Coffee machine (1,1') consisting of a thermoblock (1) assembled by two separate parts, comprising at least: - an external female part **(1^1)** shaped prismatic or cylindrical; - an inner male part **(1^2)** shaped cylindrical; - a diffuser with water vent valve (M); - an helical bar (8); wherein female part (**1^1**) is separated from male part (**1^2**) and male part (**1^2**) is joint to external female part (**1^1**) thread coupled, so that top sides of said parts are on the same level; and wherein the coffee machine (1,1') has outer female part (**1^1**) and inner male part (**1^2**) made of metal or other types of materials.

2. Coffee machine (1,1') according to claim **1,** wherein female part (**1^1**) anc male part (**1^2**) have holes and grooves (**1a, 2a, 3a, 4a 5a, 6a, 1b, 2b, 3b,**) for fixing, tightening and inserting devices and means for regulating and controlling the flow, temperature and water pressure

3. Coffee machine (1,1') according to claim **1,** wherein cylindrical male part (**1^2**) has on top surface n + 1 (for each n = 0, ... , n) blind holes (**1b**) connected with the same number of grooves (2b) toward the center, wherein said holes (1b) are used for fastening female part (**1^1**) ) to male part (1^2) by appropriate wrench compass.

4. Coffee machine (1,1') according to claim **1,** wherein in thermoblock (1) there is an inner chamber/boiler (1ab), this chamber is formed thread coupling the female part (**1^1** ) with the male part (**1^2** ) so that top side of parts are on the same level so that the system goes watertight.

5. Coffee machine (1,1') according to claim **1,** in which assembly group (M) is composed by: - an hydraulic-diffuser-plug (T) screwed to male part (1^2), water diffusion is obtained by n+1 (n=0,..,n) side holes; - a spring (R) with a rubber tip (S) inserted in the hydraulic-diffuser-plug (T), this assembly acts as valve between chambers (1ab, 2ab).

6. Coffee machine (1,1') according to claim 1, wherein the helical bar (8) is installed in a blind hole (4a) positioned in the back of female part (**1^1**) and acts as heat exchanger with entering water, wherein the helical bar is inserted before high pressure hydraulic fitting is fastened.

## Patentansprüche

1. Kaffeemaschine (1, 1'), bestehend aus einem Thermoblock (1), der aus zwei getrennten Teilen zusammengesetzt ist und mindestens Folgendes umfasst:
- ein äußeres weibliches Teil (1^1) mit prismatischer oder zylindrischer Form;
- einen inneren männlichen Teil (1^2) mit zylindrischer Form;
- einen Diffusor mit Wasserentlüftungsventil (M);
- eine Wendelstange (8);
wobei der weibliche Teil (1^1) vom männlichen Teil (1^2) getrennt ist und der männliche Teil (1^2) mit einer Gewindekupplung mit dem äußeren weiblichen Teil (1^1) verbunden ist, so dass die Oberseite Seiten dieser Teile sind auf der gleichen Ebene; und wobei die Kaffeemaschine (1, 1') den äußeren weiblichen Teil (1^1) und den inneren männlichen Teil (1^2) aus Metall oder anderen Arten von Materialien aufweist.

2. Kaffeemaschine (1, 1') nach Anspruch 1, wobei der weibliche Teil (1^1) und der männliche Teil (1^2) Löcher und Rillen (1a, 2a, 3a, 4a, 5a, 6a, 1b, 2b, 3b) zum Befestigen, Festziehen und Einsetzen von Vorrichtungen und Mitteln zum Regulieren und Steuern von Durchfluss, Temperatur und Wasserdruck.

3. Kaffeemaschine (1, 1') nach Anspruch 1, wobei an der Oberseite des zylindrischen männlichen Teils (1^2) n + 1 (für jedes n = 0, ..., n) Sacklöcher (1b) angeschlossen sind mit der gleichen Anzahl von Rillen (2b) zur Mitte hin, wobei die Löcher (1b) zum Befestigen des weiblichen Teils (1^1) am männlichen Teil (1^2) mit einem geeigneten Kompassschlüssel verwendet werden.

4. Kaffeemaschine (1, 1') nach Anspruch 1, wobei in dem Thermoblock (1) eine Innenkammer/ein Kessel (1ab) vorhanden ist, wobei diese Kammer durch Gewindekupplung des weiblichen Teils (1^1) mit dem gebildet wird männliches Teil (1^2), so dass sich die Oberseite der Teile auf derselben Höhe befindet, so dass das System wasserdicht wird.

5. Kaffeemaschine (1, 1') nach Anspruch 1, wobei die Baugruppengruppe (M) besteht aus:
- einen Hydraulik-Diffusor-Stopfen (T), der mit dem männlichen Teil (1^2) verschraubt ist, und die Wasserdiffusion wird durch n + 1 (n = 0,..., n) Seitenlöcher erhalten;
- eine Feder (R) mit einer Gummispitze (S), die in den Hydraulik-Diffusor-Stopfen (T) eingesetzt ist, Diese Anordnung wirkt als Ventil zwischen den Kammern (1ab, 2ab).

6. Kaffeemaschine (1, 1') nach Anspruch 1, wobei die Spiralstange (8) in dem Sackloch (4a) installiert ist, das auf der Rückseite des weiblichen Teils (1^1) positioniert ist und als Wärmetauscher mit wirkt das eintretende Wasser, wobei die Wendelstange eingeführt wird, bevor eine hydraulische Hochdruckarmatur befestigt wird.

## Revendications

1. Machine à café (1, 1') constituée d'un thermobloc (1) assemblé en deux parties distinctes, comprenant au moins:
- une partie externe femelle (1^1) de forme prismatique ou cylindrique;
- une partie interne mâle (1^2) de forme cylindrique;
- un diffuseur avec purgeur d'eau (M);
- une barre hélicoïdale (8);
dans lequel la partie femelle (1^1) est séparée de la partie mâle (1^2) et la partie mâle (1^2) est reliée par un raccord fileté à la partie femelle externe (1^1), de sorte que le dessus les côtés desdites pièces sont au même niveau; et
dans lequel la machine à café (1, 1') a la partie femelle externe (1^1) et la partie mâle interne (1^2) en métal ou en d'autres types de matériaux.

2. Machine à café (1, 1') selon la revendication 1, dans laquelle la partie femelle (1^1) et la partie mâle (1^2) présentent des trous et des rainures (1a, 2a, 3a, 4a, 5a, 6a, 1b, 2b, 3b) pour fixer, serrer et insérer des dispositifs et des moyens de régulation et de contrôle du débit, de la température et de la pression d'eau.

3. Machine à café (1, 1') selon la revendication 1, dans laquelle la partie mâle cylindrique (1^2) présente sur sa face supérieure n + 1 (pour chaque n = 0,..., n) trous borgnes (1b) reliés avec le même nombre de rainures (2b) vers le centre, dans lequel lesdits trous (1b) sont utilisés pour fixer la partie femelle (1^1) à la partie mâle (1^2) par une clé à boussole appropriée.

4. Machine à café (1, 1') selon la revendication 1, dans laquelle dans le thermobloc (1) il y a une chambre intérieure/chaudière (1ab), cette chambre étant formée par vissage couplant la partie femelle (1^1) avec le partie mâle (1^2) de sorte que la face supérieure des pièces soit au même niveau, de sorte que le système devienne étanche.

5. Machine à café (1, 1') selon la revendication 1, dans laquelle le groupe d'assemblage (M) est composé de:
- un bouchon-diffuseur hydraulique (T) vissé sur la partie mâle (1^2), et la diffusion de l'eau est obtenue par n + 1 (n = 0,..., n) trous latéraux;
- un ressort (R) avec une pointe en caoutchouc (S) insérée dans le bouchon diffuseur hydraulique (T), cet ensemble faisant office de vanne entre les chambres (1ab, 2ab).

6. Machine à café (1, 1') selon la revendication 1, dans laquelle la barre hélicoïdale (8) est installée dans le trou borgne (4a) positionné à l'arrière de la partie femelle (1^1) et fait office d'échangeur de chaleur avec l'eau entrant, dans laquelle la barre hélicoïdale est insérée avant qu'un raccord hydraulique haute pression ne soit fixé.
